# EUROPÄISCHE PATENTSCHRIFT

(11) **EP 2 707 579 B1**
(45) Veröffentlichungstag und Bekanntmachung des Hinweises auf die Patenterteilung: **04.07.2018**
(21) Anmeldenummer: 12711852.9
(22) Anmeldetag: 26.03.2012
(51) Int. Cl.: F01N 3/20

(54) **VORRATSTANK UND FUNKTIONSEINHEIT HIERZU**
SUPPLY TANK AND FUNCTIONAL UNIT THEREFOR
RÉSERVOIR DE STOCKAGE ET UNITÉ FONCTIONNELLE POUR LEDIT RÉSERVOIR

(30) Priorität: 12.05.2011 DE 102011075726
(43) Veröffentlichungstag der Anmeldung: 19.03.2014
(73) Patentinhaber: Robert Bosch GmbH, 70442 Stuttgart (DE)
(72) Erfinder: HAEBERER, Rainer, 75015 Bretten (DE); LOLAS, Georgios, 70182 Stuttgart (DE)
(86) Internationale Anmeldenummer: PCT/EP2012/055314
(87) Internationale Veröffentlichungsnummer: WO 2012/152498

(56) Entgegenhaltungen:
- EP-A2- 2 161 422
- WO-A1-2010/078989
- WO-A1-2011/085830
- DE-A1-102010 003 310
- DE-A1-102010 029 636

## Beschreibung

Die Erfindung betrifft einen Vorratstank einer Einspritzeinrichtung nach dem Oberbegriff des Anspruchs 1 und eine Funktionseinheit hierzu.

### Stand der Technik

Aufgrund der zunehmend verschärften Abgasgesetzgebung muss insbesondere bei Kraftwagen mit Verbrennungsmotoren unter anderem der Stickoxid-Anteil im Abgas weiter reduziert werden. Eine gängige Methode ist ein Verfahren mit einem Katalysator zur selektiven katalytischen Reduktion (SCR), bei dem der gesundheitsschädliche Stickoxid-Anteil im Abgas unter zu Hilfenahme von flüssigem Reduktionsmittel, beispielsweise einer Harnstoffwasserlösung (sogenanntes AdBlue), zu Stickstoff und Wasser reduziert wird. Bei diesem Verfahren fördert in der Regel eine Pumpe das Reduktionsmittel von einem Vorratstank zu einem Dosierventil, welches das Reduktionsmittel wiederum in das Abgas einspritzt.

Im Zusammenhang mit dem Stand der Technik und der Erfindung wird nachfolgend verschiedentlich von "oben" und "unten" gesprochen. Dabei beziehen sich diese Angaben, wenn nichts anderes gesagt wird, auf die Einbaulage des Vorratstanks.

Aus der WO 2010/078989 A1 ist eine elektrische Widerstands-Heizung für einen Vorratstank von flüssigem Reduktionsmittel bekannt, die im Inneren und am Boden des Vorratstanks angeordnet ist. Durch das Beheizen der wässrigen Harnstoff-Wasser-Lösung wird das Einfrieren während des Betriebs und das Auftauen des Reduktionsmittels nach einem längeren Stillstand bei Dauerfrost ermöglicht.

EP 2 161 422 A1 beschreibt Systeme und Verfahren zur Abgabe einer Harnstofflösung an ein Abgasbehandlungssystem. Insbesondere wird ein Harnstofftank bereitgestellt. Die Harnstofftank umfasst ein Reservoir mit einer Fluideinlassöffnung zum Aufnehmen von Harnstofflösung und mit einer Fluidauslassöffnung zum Ausgeben der Harnstofflösung. Der Harnstofftank umfasst ferner ein belüftetes Hohlelement, das in dem Reservoir angeordnet ist. Das belüftete Hohlelement hat einen inneren hohlen Abschnitt und eine Vielzahl von Öffnungen, die einen Fluidfluss zwischen dem Reservoir und dem inneren hohlen Abschnitt ermöglichen. Der Harnstofftank umfasst ferner eine Heizeinrichtung, die entlang des hohlen Elements angeordnet ist, um die Harnstofflösung in dem inneren hohlen Abschnitt und in dem Reservoir zu erwärmen. Der Harnstofftank umfasst ferner eine in dem Reservoir angeordnete Fluidpumpe. Die Fluidpumpe steht in Fluidverbindung mit dem inneren hohlen Abschnitt und dem Reservoir, um die darin befindliche Harnstofflösung durch die Fluidauslassöffnung zu fördern.

WO 2010/078989 A1 offenbart einen Vorratstank für ein Dosiersystem zum Einbringen eines Reduktionsmittels in einen Abgastrakt einer Brennkraftmaschine. Der Vorratstank weist mindestens eine Öffnung für Einbauten sowie Öffnungen zum Befüllen und Entleeren und für eine Be/Entlüftung auf, wobei sämtliche Öffnungen oberhalb eines vom Reduktionsmittels gefluteten Bereiches des Vorratstanks angeordnet sind.

Die Entnahme der flüssigen Harnstoff-Wasser-Lösung aus dem Vorratstank erfolgt bei dem aus der WO 2010/078989 A1 bekannten System über eine Sauglanze, die über eine Öffnung an einer Tankoberseite in den Tank eingeführt wird. Bei dem aus der WO 2010/078989 A1 bekannten Vorratstank sind alle Öffnungen zum Befüllen und Entleeren des Tanks sowie die Montageöffnung zum Einbringen der Funktionseinheit oberhalb eines vom Reduktionsmittel gefluteten Bereichs des Vorratstanks angeordnet. Da jedoch die Vorratstanks verschiedener Fahrzeuge unterschiedliche Bauhöhen haben, müssen zum Beispiel die Sauglanzen, aber auch die im Inneren des Vorratstanks angeordneten Funktionseinheiten an die Tankform angepasst werden. Dies führt zwangsläufig zu einer hohen Variantenvielfalt und verursacht dadurch hohe Kosten.

Deshalb sind auch Funktionseinheiten entwickelt worden, die von unten in eine bodenseitige Öffnung im Tank eingeführt werden. Bei diesen Funktionseinheiten ist in der Regel die Pumpe oder auch ein Sensor zum Ermitteln des Füllstandes Bestandteil der Funktionseinheit. Die bekannten Ausführungen beanspruchen nachteiliger Weise jedoch einen großen Bauraum. Da der Bauraum in radialer Richtung begrenzt ist, muss die Funktionseinheit in die Höhe gebaut werden. Damit ragt die Funktionseinheit, insbesondere das Filter, bis etwa in die Mitte des Vorratstanks und ist deshalb stark eisdruckgefährdet. Das Reduktionsmittel gefriert nämlich stets von einer Außenseite des Tanks zum Innern, das heißt, dass nach einer längeren Gefrierphase in der Mitte des Tanks eine Flüssigkeitsblase übrig bleibt, die dann schlagartig einfrieren kann und sich dabei um ca. 10% ausdehnt. Dadurch entsteht ein erheblicher Druck, der sogenannte Eisdruck, leicht zu Schäden an den mit Eisdruck beaufschlagten Bauteilen der Funktionseinheit führen.

### Offenbarung der Erfindung

Die vorliegende Erfindung unterscheidet sich von dem eingangsgenannten Stand der Technik dadurch, dass zwischen der Öffnung einer Saugleitung (22) im Vorratstank und einem im Wesentlichen vertikal angeordneten Kamin ein als Drossel wirkender Spalt vorhanden ist.

Die Kombination eines Kamins, dessen oberes Ende in der Regel in eine unterhalb eines Filterelements befindliche Luftblase ragt, und eines Spalts, über den flüssiges Reduktionsmittel angesaugt wird, führt dazu, dass auch bei teilweise mit Luft beziehungsweise Abgas gefüllter Saugleitung, rasch und zuverlässig zumindest ein Zwei-Phasen-Gemisch aus Reduktionsmittel und Luft von der Pumpeneinheit gefördert wird. Dadurch wird ein zuverlässiger Betrieb des Dosiersystems erreicht und insbesondere Fehlermeldungen beziehungsweise Instabilitäten der Regelung des Dosiersystems verhindert. Im Ergebnis werden dadurch auch die Schadstoffemissionen reduziert.

Weitere vorteilhafte Ausgestaltungen der Erfindung sehen vor, dass die Funktionseinheit ein Gehäuse, einen Pumpenkörper und eine Ventilplatte umfasst, und dass die Funktionseinheit in eine Öffnung im Boden des Vorratstanks eingesetzt und dichtend mit dem Vorratstank verbunden ist. In der Ventilplatte sind eine Saugleitung und eine Förderleitung ausgebildet sind. Des weiteren können die Heizeinrichtung und eventuelle Sensoren auch noch in die Funktionseinheit integriert werden, so dass die erfindungsgemäße Funktionseinheit baut kompakt und vor allem sehr flach. Es sind darüber hinaus vorteilhafterweise keine Leitungen zur Oberseite des Vorratstanks nötig.

In einer bevorzugten Ausführungsform wird das Gehäuse der Funktionseinheit von unten in den Vorratstank eingesetzt und wird mit dem Vorratstank verschweißt. Dies gewährleistet eine einfache Montage und die nötige Dichtigkeit des Vorratstanks.

Weiterhin ist vorteilhaft, dass die Funktionseinheit zum Fördern des Reduktionsmittels durch die Förderleitung eine Pumpeinrichtung aufweist, die einen Elektromagneten, eine Arbeitsmembrane und die Ventilplatte umfasst. Die Arbeitsmembrane ist bevorzugt im Bereich der Ventilplatte bzw. eines Einlasses der Förderleitung angeordnet; der Elektromagnet ist bevorzugt in einem der Ventilplatte entgegengesetzten Bereich der Funktionseinheit angeordnet. An der Membrane ist ein Anker angeordnet, der durch ein Ein- und Ausschalten eines Stromes durch des Elektromagneten bewegt werden kann. Die Pumpeinrichtung kann daher vorteilhafterweise im Gegensatz zu den bekannten Vorrichtungen relativ flach aufgebaut werden. Durch ein so mögliches Auf- und Abschwingen der Arbeitsmembrane wird durch so erzeugte Pumpbewegungen der Arbeitsmembrane der Zufluss bzw. der Abfluss von Reduktionsmitteln in die Funktionseinheit bzw. aus der Funktionseinheit gesteuert. In der Zufluss- und Förderleitung angeordnete Ventilelemente unterstützen die jeweilige Funktion des Zuflusses und des Abflusses in die bzw. aus der Funktionseinheit. Ein in der Funktionseinrichtung angeordneter Entlüftungskanal kann für die nötige Entlüftung, insbesondere im Bereich des Zuflusses, sorgen.

Besonders vorteilhaft ist, dass die Funktionseinheit durch mindestens eine Heizvorrichtung beheizbar ist. Heizvorrichtungen sind in der Funktionseinheit nötig, damit bei Frost das Reduktionsmittel flüssig gehalten werden kann, bzw. nach einem Einfrieren im Stillstand des Fahrzeugs wieder aufgetaut werden kann. Die Heizvorrichtung kann dabei PTC Heizelemente umfassen, wobei die Heizelemente vorzugsweise in einen zylinderförmigen Aluminiumkörper eingepresst sind. Der Aluminiumkörper kann zur Vermeidung von Korrosion nachträglich mit Kunststoff umspritzt sein und stellt einen Wärmeverteilkörper dar. Andere gut wärmeleitende Materialien alternativ zu Aluminium sind natürlich auch möglich. Der zylinderförmige Wärmeverteilkörper kann dabei so breit ausgelegt sein, dass er im Wesentlichen alle Komponenten der Funktionseinheit umschließt, um die Komponenten der Funktionseinheit bei Bedarf zu beheizen bzw. aufzutauen. Der zylinderförmige Aluminiumkörper zeichnet sich durch eine hohe Steifigkeit aus, so dass besonders die im Innern des zylinderförmigen Aluminiumkörpers angeordnete druckempfindliche Komponenten der Funktionseinheit, wie die Pumpeinrichtung und die Abdichtungsbereiche der Ventilplatte zum Vorratstank, bei einem Eisdruck bei Frost ausreichend geschützt sind.

Da der Elektromagnet eher im oberen Bereich der Funktionseinheit angeordnet ist, ist die beim Bestromen des Elektromagnets erzeugte Wärme für Einrichtungen der Funktionseinheit nutzbar, die insbesondere im oberen Bereich der Funktionseinheit, wie z.B. ein Filterelement, angeordnet sind. Der Elektromagnet stellt damit neben dem Wärmeverteilkörper eine zweite Heizvorrichtung innerhalb der Funktionseinheit dar.

Weiterhin ist vorteilhaft, dass die Funktionseinheit zum Filtern des in den Vorratstank eingeführten Reduktionsmittels ein Filterelement, bevorzugt ein Filtergewebe aufweist, das mittelbar beheizbar ist. Das Filtergewebe ist dabei bevorzugt so feinmaschig ausgebildet, dass Partikel des Reduktionsmittels heraus gefiltert werden können, damit sie die Zuflussleitung bzw. die Förderleitung nicht verstopfen können. Sinnvollerweise ist das Filtergewebe im oberen Teil der Funktionseinheit angeordnet, dass es im Wesentlichen die Funktionseinheit bedeckt und dass das Filtergewebe durch den in diesem Bereich angeordneten Elektromagneten beheizbar ist. Auch die Heizelemente im zylinderförmigen Wärmeverteilkörper können Wärme in den Bereich des Filtergewebes leiten, damit dieses bei Bedarf beheizt werden kann. Bei einer Erwartung von besonders viel herauszufilternden Partikeln, kann das Filtergewebe auch wellig über der Funktionseinheit angeordnet sein, so dass eine Filteroberfläche wesentlich vergrößert werden kann. Möglich ist auch, dass das Filtergewebe tauschbar fixiert werden kann.

Damit insbesondere die Wärme aus den Heizelementen des bevorzugt kunststoffummantelten, zylinderförmigen Wärmeverteilkörpers in möglichst viele Bereiche der Funktionseinheit gelangen kann, ist es vorteilhaft, dass die Funktionseinheit an einer der Ventilplatte gegenüberliegenden Seite einen Wärmeleitring aufweist. Der Wärmeleitring gewährleistet, dass die Wärme beispielsweise an darüber liegendes Eis des Vorratstanks bestmöglich geleitet werden kann. Der Kunststoff der Ummantelung kann den Wärmeübergang unterstützen, Der Wärmeleitring sorgt für einen optimalen Übergang der Wärme an das Eis beim Auftauen. Darüber hinaus kann der Wärmeleitring an einer zu einem Vorratstankdeckel zeigenden Seite Aussparungen aufweisen, die beim Fahren des Kraftfahrzeugs im Vorratstank schwappendes, flüssiges Reduktionsmittel einfangen können. Die Aussparungen ermöglichen so, dass auch bei einem niedrigen Füllstand des Reduktionsmittels die Funktionseinheit genügend Reduktionsmittel im Innern zum Fördern aufweisen kann.

Damit immer genügend Reduktionsmittel in der Funktionseinheit zum Fördern vorhanden ist, ist es vorteilhaft, dass die Funktionseinheit mindestens ein Reservoir für Reduktionsmittel umfasst. Ein erstes Reservoir kann dabei bevorzugt im Innern des beheizbaren zylinderförmigen Wärmeverteilkörpers liegen. Dadurch wird sichergestellt, dass auch bei Frost das Reduktionsmittel beheizbar und flüssiges Reduktionsmittel im Reservoir vorhanden ist, damit es durch die Funktionseinheit gefördert werden kann.

Ferner ist vorteilhaft, dass direkt von außen an die Funktionseinheit angrenzend ein zweites Reservoir für Reduktionsmittel vorgesehen ist. Dieses außerhalb der eigentlichen Funktionseinheit angeordnete zweite Reservoir kann derart im Vorratstank angeordnet sein, dass es ebenfalls durch den zylinderförmigen Wärmeverteilkörper beheizt werden kann. Durch bspw. eine im Vorratstank außerhalb der Funktionseinheit an das weitere Reservoir angrenzende schräg in Richtung des weiteren Reservoirs verlaufende Rampe, ist es möglich, dass das weitere Reservoir auch bei relativ niedrigen Füllstand des Vorratstanks ständig durch Schwappbewegungen mit Reduktionsmittel gefüllt wird. Durch Schwappbewegungen während des Fahrens kann das Reduktionsmittel des weiteren Reservoirs anschließend über die Aussparungen des Wärmeleitrings ins Innere der Funktionseinheit gelangen.

Weitere Merkmale und Vorteile der Erfindung ergeben sich aus den abhängigen Ansprüchen, der Beschreibung und den beigefügten Figuren. Es versteht sich, dass die vorstehend genannten und die nachstehend noch zu erläuternden Merkmale nicht nur in der jeweils angegebenen Kombination, sondern auch in anderen Kombinationen oder in Alleinstellung einen wesentlichen Aspekt der Erfindung darstellen können. Die Figuren zeigen ein bevorzugtes Ausführungsbeispiel der Erfindung und werden in der nachfolgenden Beschreibung näher erläutert. Dabei zeigen:
- Fig. 1: das Umfeld der Erfindung; und
- Fig. 2: eine erfindungsgemäße Funktionseinheit eines Vorratstanks.

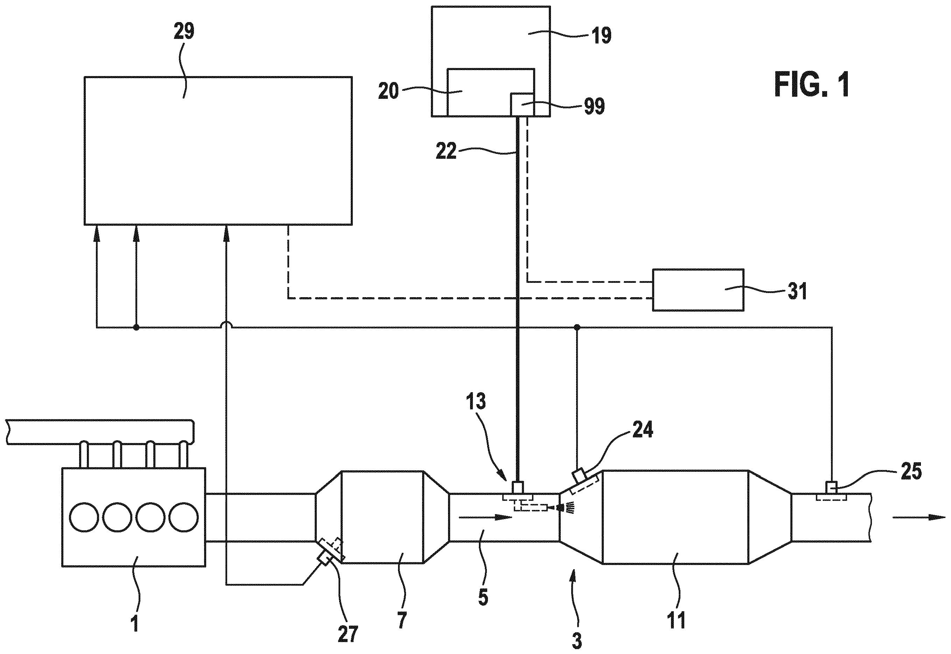

In Figur 1 ist eine Brennkraftmaschine 1 mit einer Abgasnachbehandlungseinrichtung 3 stark vereinfacht und schematisch dargestellt und zeigt das Umfeld der Erfindung. Die Abgasnachbehandlungseinrichtung 3 umfasst ein Abgasrohr 5, einen Oxidationskatalysator 7 und einen SCR-Katalysator 11 zur selektiven katalytischen Reduktion von gesundheitsschädlichem Stickoxid. Nicht dargestellt ist ein Partikelfilter, der üblicherweise stromabwärts des Oxidationskatalysators 7 angeordnet ist. Die Strömungsrichtung des Abgases durch das Abgasrohr 5 ist durch Pfeile (ohne Bezugszeichen) angedeutet.

Um den SCR-Katalysator 11 mit einem flüssigen Reduktionsmittel, z.B. einer Harnstoff-Wasser-Lösung (sog. AdBlue) oder einem anderen flüssigen Reduktionsmittel zu versorgen, ist stromaufwärts des SCR-Katalysators 11 am Abgasrohr 5 eine Dosiereinrichtung 13 für die Harnstoff-Wasser-Lösung angeordnet. Die Dosiereinrichtung 13 spritzt bei Bedarf die Harnstoff-Wasser-Lösung stromaufwärts des SCR-Katalysators 11 in das Abgasrohr 5 ein.

Ein Dosiersystem zum gezielten Einspritzen der Harnstoff-Wasser-Lösung umfasst neben der Dosiereinrichtung 13 einen Vorratstank 19, in dem eine erfindungsgemäße Funktionseinheit 20 zum Fördern flüssigen Reduktionsmittels integriert ist.

Mit dem Bezugszeichen 99 ist ein 4/2-Wegeventil dargestellt, welches dazu dient, die Förderrichtung der Funktionseinheit 20 umzukehren. Dadurch ist es möglich, das Dosiersystem weitestgehend zu entleeren, so dass Schäden bei gefrierendem Reduktionsmittel vermieden werden können.

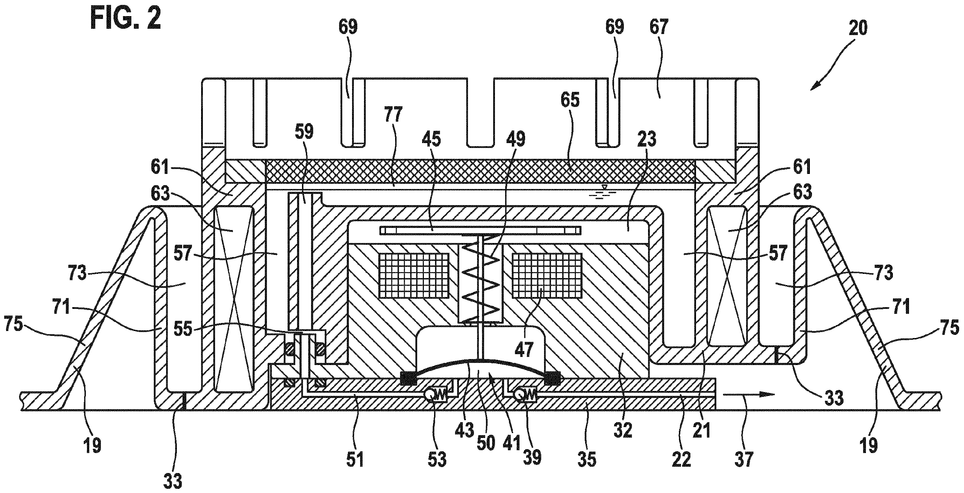

Die Funktionseinheit 20 umfasst eine Pumpeinrichtung 41 (siehe Figur 2), die bevorzugt elektrisch betätigt werden kann. Zwischen dem Vorratstank 19 und der Dosiereinrichtung 13 ist eine Förderleitung 22 vorgesehen. Sie ist bevorzugt am Vorratstank 19 unten angeschlossen. Die Förderleitung 22 kann zumindest teilweise als Schlauch ausgebildet sein. Die Funktionseinheit 20 kann einen Sensor zur Ermittlung eines Füllstandes im Vorratstank 19 umfassen (nicht dargestellt).

Der Vollständigkeit halber sei noch auf in der Abgasanlage angeordnete Sensoren, nämlich einen Stickoxid-Sensor 25, sowie Temperatur-Sensoren 24 und 27 hingewiesen. Diese Sensoren 24, 25 und 27 sind über Signalleitungen (ohne Bezugszeichen) mit einem ersten Steuergerät 29 der Brennkraftmaschine 1 verbunden. Das erste Steuergerät 29 steuert die Brennkraftmaschine 1 und sendet und empfängt Daten von einem zweiten Steuergerät 31 des Dosiersystems für die Harnstoff-Wasser-Lösung. Die Signalverbindungen von und zum zweiten Steuergerät 31 des Dosiersystems sind in Figur 1 durch gestrichelte Linien dargestellt.

Figur 2 zeigt die erfindungsgemäße Funktionseinheit 20. Die Funktionseinheit 20 umfasst eine Vielzahl von Baugruppen, wie zum Beispiel eine als Membranpumpe ausgebildete Pumpeinrichtung 41, ein Heizelement 63, einen Wärmeleitkörper 61, der oben mit einem Wärmeleitring 67 abschließt, ein Filtersieb 65, eine Ventilplatte 35 und einen (Entlüftungs-)Kamin 59.

Die Funktionseinheit 20 wird von unten in eine bevorzugt kreisrunde Öffnung des Vorratstanks 19 eingesetzt und anschließend durch eine Schweißnaht 33 dichtend mit dem Vorratstank 19 verbunden.

Die Funktionseinheit 20 setzt sich aus drei Hauptbestandteilen zusammen. Es sind die ein Gehäuse 21 mit einer Kavität 23, ein Pumpenkörper 32 und eine Ventilplatte 35.

Im Zentrum des Gehäuses 21 ist die nach unten offene Kavität 23 ausgebildet. In der Kavität 23 ist der Pumpenkörper 32 angeordnet. Abgeschlossen wird die Kavität 23 von der Ventilplatte 35.

In dem Pumpenkörper 32 sind einem Arbeitsraum 50, eine Membran 43 und deren elektromagnetischen Antrieb mit einem Anker 45 und einem Elektromagnet 47 angeordnet. Die Membrane 43 wird durch den Magnetanker 45 mit Hilfe eines Elektromagneten 47 bewegt. Im Betrieb zieht der Elektromagnet 47 den Magnetanker 45 gegen die Federkraft eines Federelements 49 an. Im Betrieb erfährt die Arbeitsmembrane 43 durch Ein- und Ausschalten eines durch den Elektromagneten 47 durchfließenden Stroms eine Auf- und Abwärtsbewegung. Bei der Abwärtsbewegung wird Reduktionsmittel aus einem Arbeitsraum 50 der Pumpeinrichtung 41 in die Förderleitung 22 gefördert, bei der Aufwärtsbewegung wird Reduktionsmittel durch eine in der Ventilplatte 35 angeordnete Saugleitung 51 in den Arbeitsbereich 50 angesaugt.

In der Ventilplatte 35 ist in Figur 2 auf der rechten Seite die Förderleitung 22 für das flüssige Reduktionsmittel integriert. In der Förderleitung 22 ist ein erstes Rückschlagventil 39 angeordnet.

In der Ventilplatte 35 ist in Figur 2 auf der linken Seite eine Saugleitung 51 integriert. In der Saugleitung 51 ist ein zweites Rückschlagventil 53 angeordnet. Die Saugleitung 51 knickt an dem in Figur 2 linken Ende senkrecht nach oben ab. Der abgeknickte Teil der Saugleitung 51 setzt sich in dem Pumpenkörper 32 und in dem Pumpengehäuse 21 fort.

Die in vertikaler Richtung verlaufende Verlängerung der Saugleitung in dem Gehäuse 21 hat das Bezugszeichen 59 und wird nachfolgend als Kamin bezeichnet. Der Kamin 59 endet kurz unterhalb eines Filterelements 65. Das Filterelement 65 ist bevorzugt als ein engmaschiges Filtergewebe ausgeführt und ist an seinem äußeren Rand dichtend mit einem Wärmeverteilkörper 61 verbunden.

Zwischen dem unteren Ende das Kamins 59 und dem vertikalen Abschnitt der Saugleitung 51 ist ein als Drossel 55 wirkender Spalt vorhanden. Über den Spalt 55 ist die Saugleitung 51 hydraulisch mit einem ersten Flüssigkeits-Reservoir 57 verbunden. Das erste Flüssigkeits-Reservoir 57 wird in radialer Richtung von einem Heizelement 63 beziehungsweise einem Wärmeverteilkörper 61 und der Kavität 23 begrenzt.

In der Figur 2 ist ein Flüssigkeitsspiegel der Harnstoff-Wasser-Lösung eingezeichnet. Wenn der Flüssigkeitsspiegel weiter absinkt als in Figur 2 dargestellt, dann ragt das obere Ende des Kamins in die unterhalb des Filterelements 65 befindliche Luftblase.

Wenn in diesem Zustand die Membranpumpe 41 eingeschaltet wird, dann saugt die Membranpumpe 41 durch die Drossel 55 die in dem ersten Flüssigkeits-Reservoir 57 vorhandenen Harnstoff-Wasser-Lösung an. Gleichzeitig saugt die Membranpumpe 41 durch den Kamin 59 Luft an. Dabei vermischen sich die Harnstoff-Wasser-Lösung und die Luft zu einem Zwei-Phasen-Gemisch, das von der Membranpumpe 41 gefördert wird.

Das Filtermaterial ist teilweise hydrophob und lässt nur wenig oder gar keine Luft durch. Somit sammelt sich unterhalb des Filtergewebes Luft an. Diese Luft war zum Teil zuvor in der Flüssigkeit gelöst oder kommt durch den Rücksaugvorgang zum Entlüften des Systems mit Hilde des über 4/2-Ventils 99 in das System. Das Rücksaugen erfolgt bei jedem Abstellen des Fahrzeugs, um Schäden durch Einfrieren zu verhindern. Dies bedeutet aber auch, dass bei jedem Start des Fahrzeugs Luft unterhalb des Filters 65 ist. Ohne den Kamin 59 und die Drossel 55 würde sich im Laufe der Zeit der gesamte Raum 57 mit Luft füllen. Saugt dann die Pumpe, so gelangt Reduktionsmittel durch das Filtergewebe 65 in den Raum 57. Dies würde zu einem unkontrollierten Absaugen führen, vor allem wenn zum Beispiel bei einer Kurvenfahrt oder einer Bergabfahrt flüssiges Reduktionsmittel in das Innere des Wärmeleitrings 67 schwappt.

Der Wärmeverteilkörper 61 ist bevorzugt aus Aluminium hergestellt, wobei auch andere Materialien eingesetzt werden können. In den Wärmeverteilkörper 61 sind ein oder mehrere PTC-Heizelemente 63 eingepresst. Die Heizelemente 63 und/oder oder der Wärmeverteilkörper 61 können zum Schutz vor Korrosion mit Kunststoff beschichtet sein.

Der Wärmeleitkörper 61 geht nach oben in einen Wärmeleitring 67 über. Der Wärmeleitkörper 61 und der Wärmeleitring 67 unterstützen die Wärmeübertragung von den Heizelementen 63 auf die Harnstoff-wasser-Lösung.

Der Wärmeleitring 67 weist Aussparungen 69 auf, die bevorzugt schräg nach innen abfallend gerichtet sind. Die Aussparungen 69 enden im Innern des Wärmeleitrings 67 etwas oberhalb des Filterelements 65, so dass das flüssige Reduktionsmittel zum Beispiel bei einer Bergauffahrt in das Innere des Wärmeleitrings und auf das Filterelement 65 gelangen kann.

Außerhalb des zylindrischen Wärmeverteilkörpers 61 bildet der Vorratstank 19 eine umlaufende Wand 71, die mit der Außenwandung des Wärmeverteilkörpers 61 ein weiteres Reservoir 73 bildet. Das zweite Reservoir 73 hat unter anderem die Funktion eines Schwalltopfs. Zum Vorratstank 19 schließt sich an die umlaufende Wand 71 eine schräg verlaufende Rampe 75 an, welche das zweite Reservoir 73 begrenzt.

Wenn in dem Vorratstank flüssiges Reduktionsmittel vorhanden ist, gelangt es durch das Filterelement 65 in das erste Reservoir 57 und kann bei Bedarf von der Membranpumpe 41 gefördert werden. Dies geschieht indem bei Bedarf durch Anheben der Arbeitsmembrane 43 Reduktionsmittel aus dem Reservoir 57 über die Zuflussleitung 51 in den Arbeitsbereich 50 gesaugt wird. Durch Einschalten des Stroms für den Elektromagneten 47 wird über den Magnetanker 45 die Arbeitsmembrane 43 abwärts bewegt. Dadurch wird Reduktionsmittel durch die Förderleitung 22 zur Dosiereinrichtung 13 gefördert.

Durch Schwappbewegungen des Reduktionsmittels während einer Fahrt kann das Reduktionsmittel bei niedrigem Füllstand aus dem Vorratstank 19 über die Rampe 75 in das zweite Reservoir 73 gelangen. Von dort gelangt das Reduktionsmittel über die Aussparungen 69 des Wärmeleitrings 67 in das erste Reservoir 57. Aus dem Reservoir 57 wird das Reduktionsmittel in der oben beschriebenen Weise von der Membranpumpe 41 gefördert.

Wenn strenger Frost herrscht, friert das Reduktionsmittel langsam von unten und außen ein. Um flüssiges Reduktionsmittel bereitstellen zu können, muss das Reduktionsmittel beheizt bzw. aufgetaut werden. Hierzu dienen einerseits die Heizelemente 63 im zylinderförmigen Wärmeverteilkörper 61, andererseits kann die abgegebene Wärme des Elektromagneten 47 als Heizvorrichtung genutzt werden. Zweckmäßigerweise ist die Pumpeinrichtung 41 so angeordnet, dass der Elektromagnet 47 im oberen Bereich der Funktionseinheit 20 angeordnet ist.

Die Ventilplatte 35 schließt nach unten die Funktionseinheit 20 plan ab. Durch diese Anordnung ist gewährleistet, dass bei Frost zunächst die Ventilplatte 35 einfriert, während der darüber liegende Bereich, insbesondere durch die Lage des wärmenden Elektromagneten 47 und des Wärmeverteilkörpers 61 erst später einfriert. Bei einem solchen von unten nach oben gerichteten Einfrieren, kann sich kein Eisdruck aufbauen, da das Reduktionsmittel kontinuierlich nach oben bis unter das Filterelement 65 entweichen kann.

Unterhalb des Filterelements 65 ist eine Luftblase 77 vorhanden, weil die aus dem Reduktionsmittel ausgeschiedene Luft nicht durch das engmaschige Filterelement 65 nach oben entweichen kann. Diese kompressible Luftblase 77 nimmt die Ausdehnung des Reduktionsmittels beim Übergang von der flüssigen Phase zur festen Phase auf und verhindert dadurch, dass die Funktionseinheit 20 durch Eisdruck beschädigt wird.

Infolge der Volumenzunahme des gefrierenden Reduktionsmittels kann es im Vorratstank 19 zu erheblichen Verformungen kommen. Das erfindungsgemäße Design der Funktionseinheit 20 zeichnet sich aufgrund des zylinderförmigen Wärmeverteilkörpers 61 durch eine hohe Steifigkeit aus. Die verformungskritische Pumpeinheit 41 sowie eine Dichtstelle der Ventilplatte 35 zum Vorratstank 19 sind im Innern durch den zylinderförmigen Wärmeverteilkörpers 61 vor Beschädigungen geschützt, weil das Reduktionsmittel von unten nach oben durchfriert und die Luftblase 77 die Volumenzunahme des gefrierenden Reduktionsmittels aufnimmt.

Die umlaufende Wand 71 im Boden des Vorratstanks macht diesen in radialer Richtung sehr weich, so dass eventuell auftretende Verformungen in der Wand 71 des Vorratstanks 19 und nicht in der Funktionseinheit 20 stattfinden.

## Patentansprüche

1. Funktionseinheit (20) für einen Vorratstank (19) für ein flüssiges Reduktionsmittel, wobei die Funktionseinheit (20) im Boden des Vorratstanks (19) vorsehbar ist, mit einer Pumpeinrichtung (41), die dazu eingerichtet ist, das Reduktionsmittel aus dem Vorratstank (19) zu fördern, **dadurch gekennzeichnet, dass** zwischen einer Öffnung, die in einem vertikalen Abschnitt einer Saugleitung (51) ausgebildet ist, und einem unteren Ende eines im Wesentlichen vertikal angeordneten Kamins (59) ein als Drossel wirkender Spalt (55) vorhanden ist, wobei die Saugleitung über den Spalt (55) hydraulisch mit einem ersten Reservoir (57) für Reduktionsmittel verbunden ist, und wobei der Kamin (59) kurz unterhalb eines Filterelements (65) endet und eingerichtet ist zum Ansaugen von Luft, welche sich unterhalb des Filterelements (65) ansammeln kann.

2. Funktionseinheit (20) nach Anspruch 1, **dadurch gekennzeichnet, dass** sie in eine Öffnung im Boden des Vorratstanks (19) einsetzbar und dichtend mit dem Vorratstank (19) verbindbar ist.

3. Funktionseinheit (20) nach Anspruch 1 oder 2, **dadurch gekennzeichnet, dass** sie mindestens ein Gehäuse (21), einen Pumpenkörper (32) und eine Ventilplatte (35) umfasst.

4. Funktionseinheit (20) nach Anspruch 3, **dadurch gekennzeichnet, dass** in der Ventilplatte (35) eine Saugleitung (51) und eine Förderleitung (22) ausgebildet sind.

5. Funktionseinheit (20) nach einem der vorhergehenden Ansprüche, **dadurch gekennzeichnet, dass** die Pumpeinrichtung (41) einen Anker (45), einen Elektromagneten (47), eine Membran (43) und eine beziehungsweise die Ventilplatte (35) umfasst.

6. Funktionseinheit (20) nach einem der vorhergehenden Ansprüche, **dadurch gekennzeichnet, dass** sie durch ein Heizelement (63), einen Wärmeleitkörper (61) und/oder einen Wärmeleitring (67) beheizbar ist.

7. Funktionseinheit (20) nach Anspruch 6, **dadurch gekennzeichnet, dass** der Wärmeleitkörper (61) und/oder der Wärmeleitring (67) im Wesentlichen zylinderförmig ausgebildet ist.

8. Funktionseinheit (20) nach einem der vorhergehenden Ansprüche, **dadurch gekennzeichnet, dass** am oberen Ende des Wärmeleitkörpers (61) das als Filtergewebe ausgeführte Filterelement (65) dichtend angebracht ist.

9. Funktionseinheit (20) nach einem der Ansprüche 6 bis 8, **dadurch gekennzeichnet, dass** der Wärmeleitring (67) Aussparungen (69) aufweist, die beim Fahren im Vorratstank (19) schwappende Flüssigkeit einfangen.

10. Funktionseinheit (20) nach einem der Ansprüche 6 bis 9, **dadurch gekennzeichnet, dass** der Wärmeleitkörper (61) das erste Reservoir (57) für Reduktionsmittel begrenzt.

11. Funktionseinheit (20) nach einem der vorhergehenden Ansprüche, **dadurch gekennzeichnet, dass** sich im Betrieb unterhalb des Filterelements (65) eine Luftblase (77) bildet.

12. Vorratstank (19) für ein flüssiges Reduktionsmittel, wobei im Boden des Vorratstanks (19) eine Funktionseinheit (20) nach einem der vorangehenden Ansprüche vorgesehen ist.

## Claims

1. Functional unit (20) for a storage tank (19) for a liquid reducing agent, it being possible for the functional unit (20) to be provided in the bottom of the storage tank (19), having a pumping device (41) which is set up to deliver the reducing agent from the storage tank (19), **characterized in that** there is a gap (55) which acts as a throttle between an opening, which is configured in a vertical section of a suction line (51), and a lower end of a substantially vertically arranged pipe (59), the suction line being connected hydraulically via the gap (55) to a first reservoir (57) for reducing agent, and the pipe (59) ending just below a filter element (65) and being set up for the intake of air which can collect below the filter element (65).

2. Functional unit (20) according to Claim 1, **characterized in that** it can be inserted into an opening in the bottom of the storage tank (19) and can be connected to the storage tank (19) in a sealing manner.

3. Functional unit (20) according to Claim 1 or 2, **characterized in that** it comprises at least one housing (21), a pump body (32) and a valve plate (35).

4. Functional unit (20) according to Claim 3, **characterized in that** a suction line (51) and a delivery line (22) are configured in the valve plate (35) .

5. Functional unit (20) according to one of the preceding claims, **characterized in that** the pumping device (41) comprises an armature (45), an electromagnet (47), a diaphragm (43) and a or the valve plate (35).

6. Functional unit (20) according to one of the preceding claims, **characterized in that** it can be heated by way of a heating element (63), a heat conducting body (61) and/or a heat conducting ring (67) .

7. Functional unit (20) according to Claim 6, **characterized in that** the heat conducting body (61) and/or the heat conducting ring (67) are/is of substantially cylindrical configuration.

8. Functional unit (20) according to one of the preceding claims, **characterized in that** the filter element (65) which is configured as a filter fabric is attached in a sealing manner to the upper end of the heat conducting body (61).

9. Functional unit (20) according to one of Claims 6 to 8, **characterized in that** the heat conducting ring (67) has cut-outs (69) which trap liquid which sloshes around in the storage tank (19) during driving.

10. Functional unit (20) according to one of Claims 6 to 9, **characterized in that** the heat conducting body (61) delimits the first reservoir (57) for reducing agent.

11. Functional unit (20) according to one of the preceding claims, **characterized in that** an air bubble (77) is formed below the filter element (65) during operation.

12. Storage tank (19) for a liquid reducing agent, a functional unit (20) according to one of the preceding claims being provided in the bottom of the storage tank (19) .

## Revendications

1. Unité fonctionnelle (20) pour un réservoir (19) pour un agent réducteur fluide, l'unité fonctionnelle (20) pouvant être prévue dans le fond du réservoir (19), comprenant un dispositif de pompe (41) qui est prévu pour refouler l'agent réducteur hors du réservoir (19),
**caractérisée en ce qu'**entre une ouverture qui est réalisée dans une portion verticale d'une conduite d'aspiration (51) et une extrémité inférieure d'une cheminée (59) disposée sensiblement verticalement, est prévue une fente (55) agissant tant qu'étranglement,
la conduite d'aspiration étant connectée hydrauliquement par le biais de la fente (55) à un premier contenant de stockage (57) d'agent réducteur et la cheminée (59) se terminant juste en dessous d'un élément de filtre (65) et étant prévue pour aspirer de l'air qui peut s'accumuler en dessous de l'élément de filtre (65).

2. Unité fonctionnelle (20) selon la revendication 1,
**caractérisée en ce qu'**elle peut être insérée dans une ouverture dans le fond du réservoir (19) et peut être connectée de manière hermétique au réservoir (19).

3. Unité fonctionnelle (20) selon la revendication 1 ou 2, **caractérisée en ce qu'**elle comprend au moins un boîtier (21), un corps de pompe (32) et une plaque de soupape (35).

4. Unité fonctionnelle (20) selon la revendication 3,
**caractérisée en ce qu'**une conduite d'aspiration (51) et une conduite de refoulement (22) sont réalisées dans la plaque de soupape (35).

5. Unité fonctionnelle (20) selon l'une quelconque des revendications **caractérisée en ce que** le dispositif de pompe (41) comprend un induit (45), un électroaimant (47), une membrane (43) et une, ou la, plaque de soupape (35).

6. Unité fonctionnelle (20) selon l'une quelconque des revendications précédentes, **caractérisée en ce qu'**elle peut être chauffée par un élément chauffant (63), un corps thermoconducteur (61) et/ou une bague thermoconductrice (67).

7. Unité fonctionnelle (20) selon la revendication 6,
**caractérisée en ce que** le corps thermoconducteur (61) et/ou la bague thermoconductrice (67) sont réalisés essentiellement sous forme cylindrique.

8. Unité fonctionnelle (20) selon l'une quelconque des revendications précédentes, **caractérisée en ce qu'**à l'extrémité supérieure du corps thermoconducteur (61) est monté de manière hermétique l'élément de filtre (65) réalisé sous forme de tissu filtrant.

9. Unité fonctionnelle (20) selon l'une quelconque des revendications 6 à 8, **caractérisée en ce que** la bague thermoconductrice (67) présente des évidements (69) qui reçoivent le liquide clapotant dans le réservoir (19) pendant la conduite.

10. Unité fonctionnelle (20) selon l'une quelconque des revendications 6 à 9, **caractérisée en ce que** le corps thermoconducteur (61) limite le premier réservoir (57) pour agent réducteur.

11. Unité fonctionnelle (20) selon l'une quelconque des revendications précédentes, **caractérisée en ce qu'**une bulle d'air (77) se forme pendant le fonctionnement en dessous de l'élément de filtre (65).

12. Réservoir (19) pour un agent réducteur fluide, une unité fonctionnelle (20) selon l'une quelconque des revendications précédentes étant prévue dans le fond du réservoir (19).
